# EUROPEAN PATENT SPECIFICATION

(11) **EP 2 699 936 B1**
(45) Date of publication and mention of the grant of the patent: **07.03.2018**
(21) Application number: 11863983.0
(22) Date of filing: 20.04.2011
(51) Int. Cl.: G01S 7/03, G01S 13/42, G01S 13/93, H01Q 1/32, H01Q 3/00, H01Q 3/34, H01Q 21/06

(54) **ANTENNA DEVICE, AMPLIFIER AND RECEIVER CIRCUIT, AND RADAR CIRCUIT**
ANTENNE VORRICHTUNG, VERSTÄRKER UND EMPFÄNGERSCHALTKREIS SOWIE RADARSCHALTKREIS
DISPOSITIF À ANTENNE, CIRCUIT D'AMPLIFICATEUR ET DE RÉCEPTEUR ET CIRCUIT RADAR

(43) Date of publication of application: 26.02.2014
(73) Proprietor: NXP USA, Inc., Austin TX 78735 (US)
(72) Inventor: TROTTA, Saverio, 80538 Munich (DE)
(74) Representative: Freescale law department - EMEA patent ops
(86) International application number: PCT/IB2011/051737
(87) International publication number: WO 2012/143761

(56) References cited:
- EP-A1- 2 284 944
- KR-A- 20100 017 207
- KR-A- 20100 017 955
- US-A- 5 339 083
- US-A1- 2004 027 305
- US-A1- 2005 128 132
- US-A1- 2007 129 040
- US-A1- 2009 184 879
- US-A1- 2010 053 022
- US-A1- 2011 032 151

## Description

### Field of the invention

This invention relates to an antenna device and to a radar circuit.

### Background of the invention

US 2005/128132 A1 describes four different control patterns with which a supply network of a radar sensor operates five partial antennas of a transmitting module and three partial antennas of a receiving module. Switches in the supply network are for selecting a desired one of four selectable angular resolutions (narrow/narrow, narrow/wide, wide/narrow, and wide/wide).

US 2004/027305 A1 describes an antenna array having a transmit antenna array and a receive antenna array. Each of the transmit and receive antenna arrays includes four radiators in azimuth. Phase shifters are provided for introducing a same phase shift to transmitted signals as well as to received signals resulting in a same squint of the transmit and receive antenna arrays.

US 2007/129040 A1 describes a set of phase shifting and amplitude adjusting modules each having a resonator circuit employed as a phase shifter for a local oscillator signal. The output of the phase shifter is fed via a variable gain/attention device, a coupler, a high power amplifier, and a transmit/receive switch to an antenna element. A portion of the output of the variable gain/attention device is fed to a mixer through the coupler.

US 5,339,083A describes a transmit-receive module. The RF signal to be transmitted is to a digital phase shifter where it is provided with a predetermined phase shift before it is input to a high power amplifier selected by a duplexer. The RF signal is then amplified up to a predetermined level, and transmitted into space via the duplexer and an antenna element. Radio waves incoming from space are received by the antenna element and input to a low-noise amplifier via the duplexer. The received signal is amplified to a predetermined level and fed to the digital phase shifter, via the duplexer, where it is provided with predetermined phase shift to receiver.

US 2011/032151 A1 describes a radar sensor comprising a group antenna having multiple antenna elements and a mixer system for realizing different directional characteristics for transmit operation and a receive operation.

Continuing improvements in antenna and semiconductor technologies facilitate performing novel concepts for intelligent radar systems.

### Summary of the invention

The present invention provides an antenna device and a radar circuit, as described in the accompanying independent claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
Fig. 1 schematically shows a top view on a first example radar circuit.
Fig. 2 schematically shows an example embodiment of a detail of a microstrip patch antenna having a certain electrical condition.
Fig. 3 schematically shows an example embodiment of the microstrip patch antenna at another instant when having an electrical condition inverse to the electrical condition shown in Fig. 2.
Fig. 4 schematically shows an example embodiment of a beam forming performed by the example radar circuit of Fig. 1.
Fig. 5 schematically shows an example embodiment of signal strength of radar response received when employing the example radar circuit of Fig. 1 in a constellation of reflecting objects as shown in Fig. 4.
Fig. 6 shows a second example radar circuit.
Fig. 7 schematically shows an example embodiment of a beam forming performed by the example radar circuit of Fig. 6.
Fig. 8 schematically shows an example embodiment of an amplifier and receiver circuit usable for a radar circuit according to Fig. 6.
Fig. 9 schematically shows an extract of a radar circuit.

### Detailed description of the preferred embodiments

Because the illustrated embodiments of the present invention may for the most part, be implemented using electronic components and circuits known to those skilled in the art, details will not be explained in any greater extent than that considered necessary, for the understanding and appreciation of the underlying concepts of the present invention and in order not to obfuscate or distract from the teachings of the present invention. In the context of the specification it may be assumed that any device capable of switching on and off a current may also be able to control strength of the current switched. A current strength control and/or a switching may be performed based on a control current or control voltage, for example in the context of transistors. A control of the current may be performed continuously. Lines for transfer of information may comprise at least one of a wireline interface, a radio interface, or an optical interface.

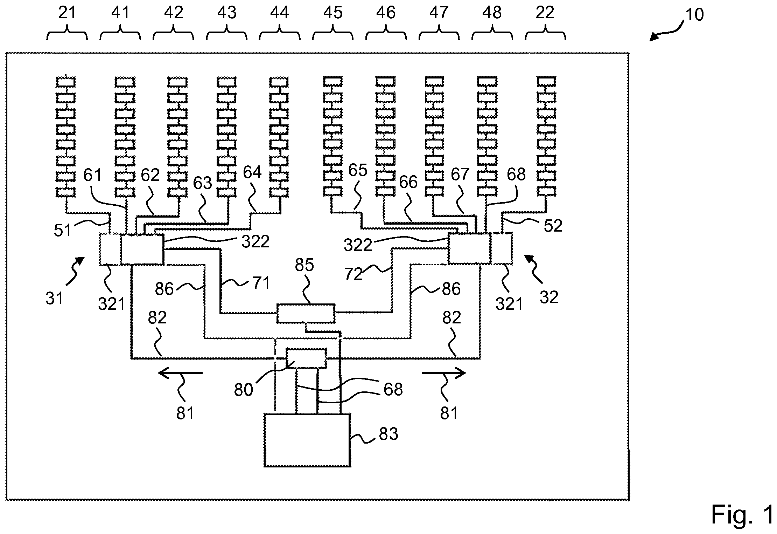

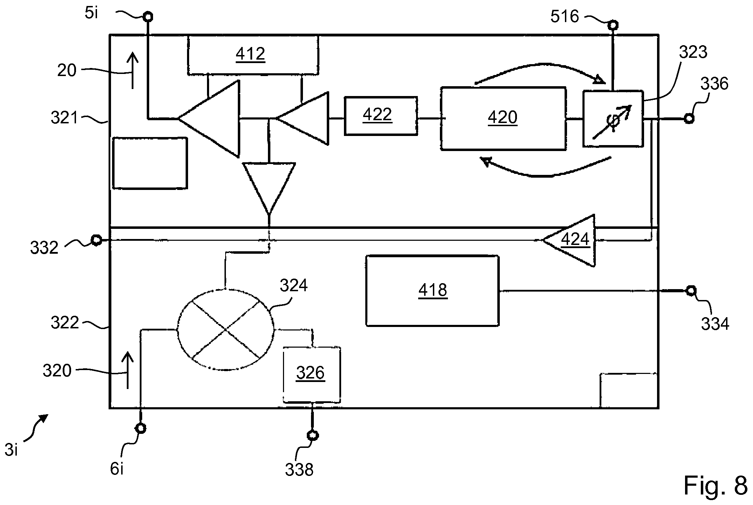

Fig. 1 schematically shows a top view on a first example radar circuit 10. The radar circuit 10 may comprise two microstrip patch antennas 21, 22 for emission of radar signal 20 (see Fig. 8). A first amplifier and receiver (PARx) circuit 31 may feed the first transmit antenna 21 and a second amplifier and receiver circuit 32 may feed the second transmit antenna 22. Each of the amplifier and receiver circuits 31, 32 may have four receive channels 61, 62, 63, 64. Each receive channel 6i may be fed by an own microstrip patch antenna 4i dedicated to the respective receive channel 6i. A local oscillator 80 may feed a local oscillator signal 81 to both amplifier and receiver circuits 31, 32. Each of both amplifier and receiver circuits 31, 32 may generate an own intermediate frequency signal 71, 72 for feeding it to a demodulation unit 85. The radar circuit 10 may comprise a control unit 83. Via a calibration line 86, the control unit 83 may feed a phase calibration signal to each of both amplifier and receiver circuits 31, 32. The control unit 83 may control the local oscillator 80 via further control lines 68. The local oscillator 80 may feed the local oscillator signal 81 to the control unit 83 via a local oscillator signal line 82.

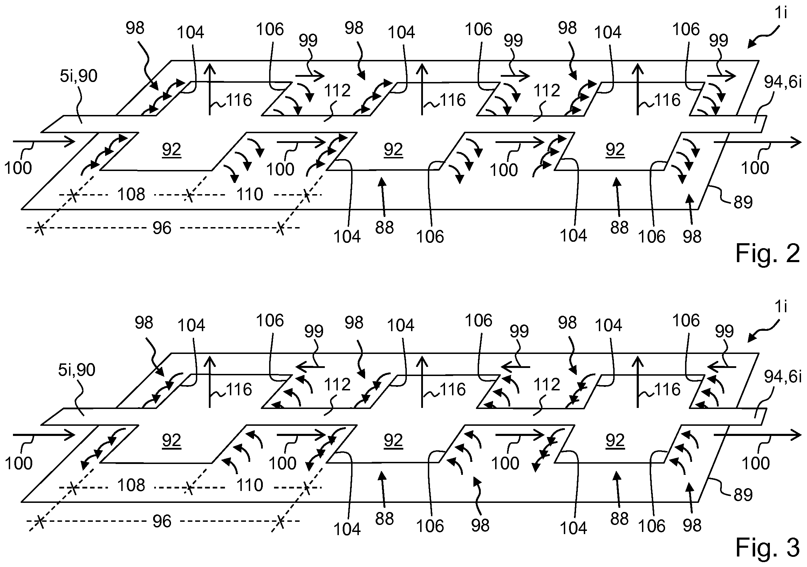

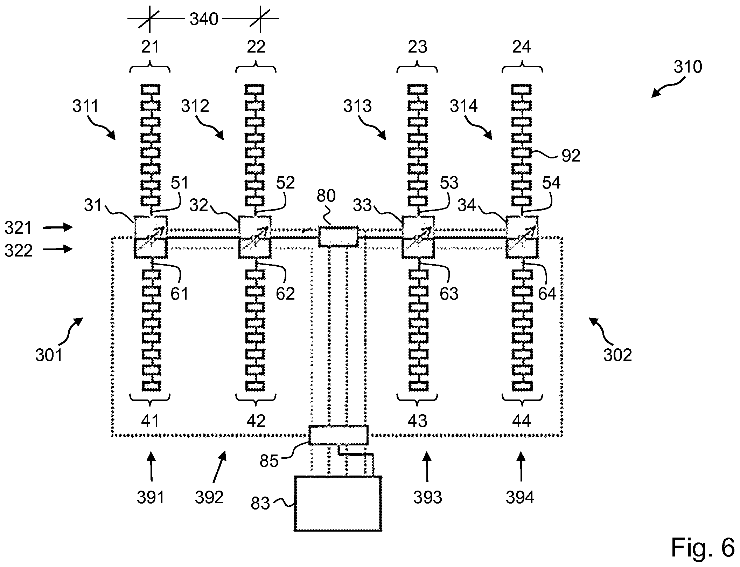

Fig. 2 schematically shows an example embodiment of a detail of a microstrip patch antenna 2i having a certain electrical condition. The microstrip patch antenna 2i may comprise a conductive strip 90, 92, 112 arranged on a layer 88 made of an isolating material. A conductive layer 89 may be arranged on an opposite side of the isolating layer 88. The conductive layer 89 may be called 'ground plane'. An amplifier 3i (see Fig. 1 or 6) may feed a radio frequency signal 20 (see Fig. 8) to an input terminal 90 or to a feed line 90 of the microstrip patch antenna 2i. The radio frequency signal 20 may propagate through the microstrip patch antenna 2i until it reaches a last patch 92 of the microstrip antenna 2i or an output terminal 94 of the microstrip antenna 2i. When the microstrip antenna 2i has a pitch 96 complying with a fundamental frequency 1/λ of the radio frequency signal 20, the wave of the radar signal 20 may form electric field lines 98 between the patches 92 and the conductive layer 89 as shown in Fig. 2. When a pitch 96 of the patches 92 in propagation direction 100 of the feed line 90 complies with a wavelength λ of the radar signal 20 all inbound edges 104 of the patches 92 may have a same electric potential. The inbound edges 104 may be perpendicular to the propagation direction 100. Then, all outbound edges 106 of the patches 92 may have the same electric potential but with opposite sign. In other words, this applies, when each of a length 108 of the patches 92 in propagation direction 100 of the feed line 90 and of the length 110 of feed lines 112 between adjacent patches 92 equals about half λ/2 the wavelength λ of the radar signal 20 in the microstrip structure 2i in propagation direction 100. Hence, the field component 99 parallel to the surface (wide side) of the patches 92 of each of the electric field lines 98 shown in Fig. 2 and Fig. 3 at the edges 104, 106 of the patches 92 may have a same direction, a same value and a same sign. The outbound edges 106 may be perpendicular to the propagation direction 100.

Fig. 3 schematically shows an example embodiment of the microstrip patch antenna 2i at another instant than that of Fig. 2, wherein an electrical condition of the microstrip patch antenna 2i is inverse to the electrical condition shown in Fig. 2. Therefore, all the patches 92 of such a microstrip patch antenna 2i having a chain of patches 92 may behave as a set of synchronously oscillating electric dipoles, supposed a wavelength λ fitting to the pitch 96 of the patches 92 is applied. Hence, each antenna patch 92 may form an oscillating electric dipole emitting radio waves with a pointing vector 116 which is perpendicular to the surface of each patch 92. When all antenna patches 92 work synchronously, all antenna patches 92 may emit radar waves in a same direction 116. Then, the conductive ground layer 89 may work as a radiation shield. A reciprocal antenna operation may be employed when the microstrip antenna is used as a receive antenna 4i. In this case, the antenna patches 92 may receive a radio signal 320 and may forward this to an output terminal 94 of the microstrip patch antenna 4i, which may have the same built as microstrip patch antenna 2i.

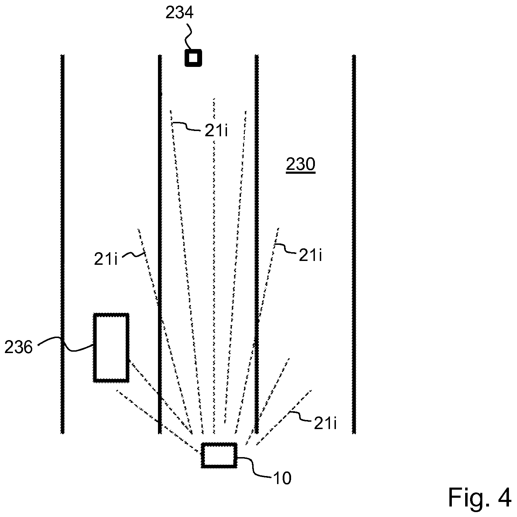

Fig. 4 schematically shows an example embodiment of transmit beams 21i emitted by the example radar circuit 10 of Fig. 1. When beam forming is implemented only on the receiving side, the transmit antenna 2i irradiates in every direction of the field 230. When the transmitter signal illuminates the complete field 230, the beam 22i may be steered at the receiver port 6i only, for example to detect a motor bike 234 or a truck 236.

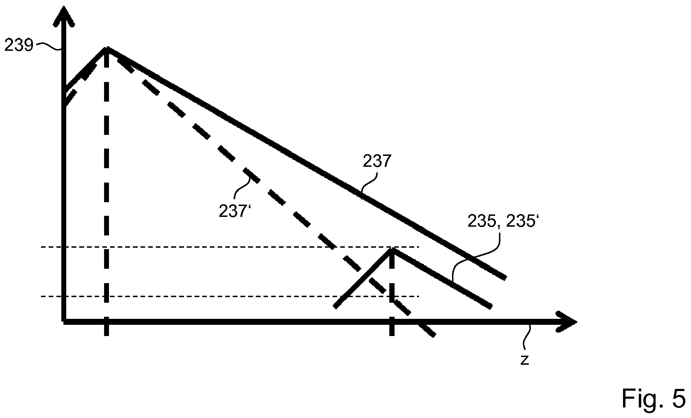

Fig. 5 schematically shows an example embodiment of signal strength 235, 237 (over distance from the radar device) of a radar response 235, 237 received when employing the example radar circuit 10 of Fig. 1 in a constellation of reflecting objects 234, 236 as shown in Fig. 4. In this case, at the receive antenna 4i, there may occur an overlapping of different targets 234, 236 coming from different directions with different power levels 235, 237. In this case, due to the phase noise associated to the receiving signal, it is hard to distinguish all targets 234, 236. A noise floor of a near big target 236 may hide a far target 234. And, a noise floor of a near target 236 may hide a far small target 234. The phase noise of the reflected signal 237 from a truck 236 may hide a signal 235 reflected by a motor bike 234. This may limit a performance of the radar circuit 10. A much better phase noise for the transmitter 3i would be required to avoid a hiding of the motor bike 234 and to detect the reflected signal from the motor bike 234.

Fig. 6 shows a second example radar circuit 310. Using this radar circuit 310, the beam 21i may be steered at the amplifier 321 and at the receiver 322 as well. Both the amplifier 321 and the receiver 322 on each channel i may have a synchronous phase. Phased arrays 2i, 4i on the amplifier side and on the receiver side can perform a beam steering. Theoretically, it is possible to synthesize at least up to 16 digital beams to achieve lower power consumption and a better resolution. The radar circuit 310 may comprise a first chain 301 of at least two radar components 391, 392. Each of the radar components 391, 392 may comprise an amplifier and receiver circuit 3i for generating radar signals 20 (see Fig. 8) and for receiving radar response signals 320. The amplifier and receiver circuit 3i may comprise a phase shifter 323 and a mixer 324. The amplifier and receiver circuit 3i may also comprise a frequency multiplier 420. Each of the radar components 391, 392 may further comprise a transmit antenna 2i for emitting radar waves 20 and a receive antenna 4i for receiving radar response waves 320. The transmit antennas 2i and receive antennas 4i of the radar components 391, 392 may be microstrip antennas.

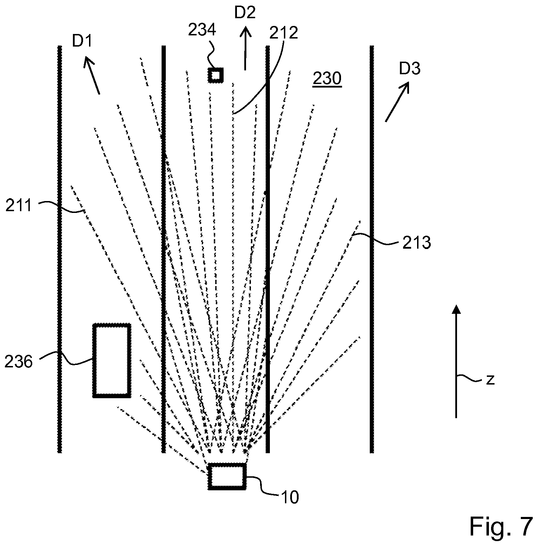

Fig. 7 schematically shows an example embodiment of a beam forming performed by the example radar circuit 310 of Fig. 6. The radar beam 21i, 22i may be steered at the amplifier 321 and at the receiver 322 as well. Both the amplifier 321 and receiver 322 on each channel i may operate with a synchronous phase. The amplifier 321 may illuminate the field 230 in the same direction as the receiver 322. Beam by beam the whole field 230 to be covered may be scanned. In this case, the field strength 235' of the reflected signals 320' from the motor bike 234 can surmount the field strength 237' of the reflected signals 320' from the truck 236 (see dashed slopes in Fig. 5). Hence, this radar circuit 310 may overcome limitations of the first example radar circuit 10. A fix step phase shift to steer the beam 21i (e.g. in three directions) may be employed. On top, a digital beam forming on the receiver signals 320 may be applied. A circuit employing a single separate amplifier and receiver circuit chip for each amplifier/receiver pair 3i may be used. This may help to reduce losses due to path losses and/or a derouting of paths from the antenna 2i, 4i to the chip. The reduction of losses may increase a total sensitivity and allow a decrease of a size of the device, because the total number of antenna patches 92 may be decreased. In addition, or as an alternative, the increased total sensitivity may allow a reduction of an output power.

The antenna device 1i may comprise a first chain 301 of at least two antenna components 31i wherein each of the antenna components 31i may comprise: a transmit antenna 2i having a line of antenna patches 92 for emitting radar waves; and a receive antenna 4i having a line of antenna patches 92 for receiving radar response waves 320, wherein the line of antenna patches 92 of the transmit antenna 2i may be aligned with the line of antenna patches 92 of the receive antenna 4i. A distance 340 between a line of antenna patches 92 of the transmit antenna 2i of a first 311 of the antenna components 31i and a line of antenna patches 92 of the transmit antenna 2i of a second 312 of the antenna components 31i may equal between 1.2 and 2 wavelengths of a resonance wavelength λ of the transmit antenna 2i. In principle, it may be possible to arrange transmit antennas 2i and receive antennas 4i with same orientation on the same side of the amplifier and receiver circuit 3i.

An amplifier and receiver circuit 3i of each antenna component 31i may be located between the transmit antenna 2i of the radar component 39i and the receive antenna 4i of the antenna component 31i. The radar components 39i may comprise only one amplifier and receiver circuit 2i for generating radar signals 20 (see Fig. 8) and for receiving radar response signals 320. The variable local oscillator 80 may be located between the first chain 301 of radar components 39i and a second chain 302 of radar components 39i, wherein each of the radar components 39i of the second chain 302 may comprise: an amplifier and receiver circuit 3i for generating radar signals 20 and for receiving radar response signals 320, the amplifier and receiver circuit 3i comprising a phase shifter 323 and a multiplier 324; a transmit antenna 2i for emitting radar waves 20; and a receive antenna 4i for receiving radar response waves 320. The radar circuit may further comprise a phase controller 350. The radar circuit may further comprise a variable local oscillator 80.

Fig. 7 illustrates a concept for performing a steering of the transmit beam 21i in three directions Di. The transmit antenna 2i may illuminate in a same direction of the receive antenna 4i. For this, transmit and receive beams 22i may be steered such that the transmit beam 22i is synchronized to the receive beam 22i, and vice versa. Both the amplifier 321 and the receiver 322 may have a synchronous phase ϕ. In this case, during each sweep the radar may keep looking in a single direction Di only. To achieve a lower power consumption and better resolution than radar systems as shown in Fig. 1, up to 16 digital beams can be synthesized, at least theoretically. With the synchronous beam steering of the transmit beam 22i, reflected signals 320 from the truck 236 and the motor bike 234 need not overlap, thereby overcoming limitations of conventional systems. Hence, with the present invention a probability to detect or distinguish overlapping targets 234, 236 (that otherwise can hide each other) may be much higher.

Fig. 8 schematically shows an example embodiment of an amplifier and receiver circuit 3i usable for a radar circuit 310 according to Fig. 6. The amplifier and receiver circuit 3i for amplifying radar signals 20 and for receiving radar response signals 320 may comprise a phase shifter 323 for shifting a phase of the radar signals 20 to be amplified and for synchronously shifting the received radar response signals 320. The amplifier and receiver circuit 3i may comprise a frequency multiplier 420.

The local oscillator signal 82 may be provided to the amplifier and receiver circuit 3i at an input terminal 336. One phase shifter 323 per amplifier and receiver circuit 3i may control at the same time one synchronized pair i of amplifier /receiver channels 5i, 6i. Only one multiplier chain 420 may be needed per amplifier and receiver 3i. Each of both measures may reduce power consumption. The phase shifter 323 may be placed before or after the multiplier. A baseband block 326 may be integrated on a receiver chip.

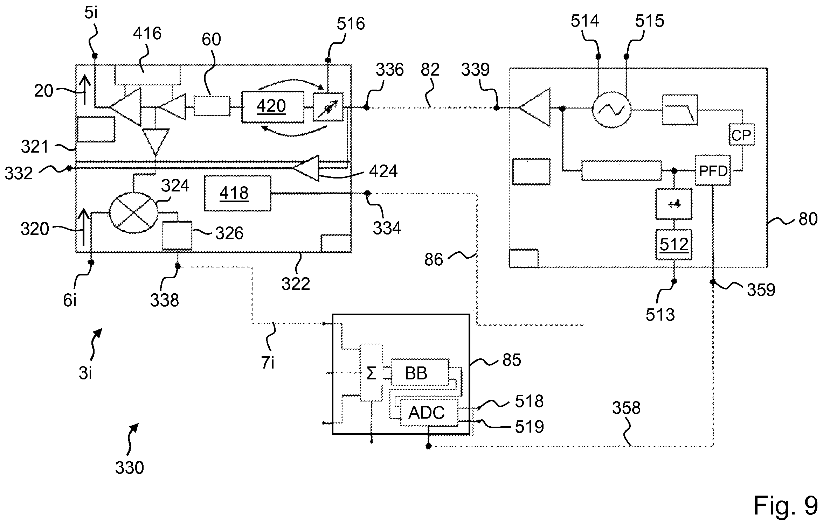

Fig. 9 schematically shows an extract of an example embodiment of a radar circuit 330. The radar circuit 330 may comprise a voltage-controlled oscillator 80, a chain 30j of amplifier and receiver circuits 3i, and a demodulator 85 for radar signals 20. All or any subset of these three circuits 3i, 80, 85 may be integrated on a single chip.

The voltage-controlled oscillator circuit 80 may supply a local oscillator signal 81 at an output terminal 339. The local oscillator signal 81 may be fed to a first amplifier and receiver circuit 32 of the chain 301 of amplifier and receiver circuits 3i. A reference clock 358 of e.g. 50 MHz may be fed to reference clock terminals 359 of the voltage-controlled oscillator 80 and to the demodulator 85 for the radar response signal 320. Block 512 may comprise a filter. Terminal 513 may be a divider test output. The divider test output 513 may be employed in a phase-locked loop. Terminal 514 may be a control terminal for a band switch. Terminal 515 may represent an input for controlling a frequency of the voltage-controlled oscillator.

Each amplifier and receiver circuit 3i may regenerate the local oscillator signal 81 and forward it to a next amplifier and receiver circuit 3i of the chain 30j via a local oscillator signal output terminal 332, until every amplifier and receiver circuit 3i of the chain 30j is supplied by the local oscillator signal 81. Each amplifier and receiver circuit 3i may have a phase calibration terminal 334, which may be controlled by a phase calibration signal 356 provided by the microprocessor control unit 83. Each of the amplifier and receiver circuits 3i may provide an intermediate frequency signal 7i at an output terminal 338. The intermediate frequency signal 7i may be supplied to the demodulator circuit 85. Each amplifier and receiver circuit 3i may comprise a digital-to-analog converter 416 for control of transmit power, a phase shifter 323, a phase calibrator 418, a frequency multiplier 420, a filter 422, an amplifier 424, and a mixer 324. The phase shifter 323 may be used to steer transmit 21i and receive beams 22i as shown in Fig. 7. Each amplifier and receiver circuit 3i may have input terminals 334 for a phase calibration, for a local oscillator signal 81, for a radar response signal 20 received from a receive antenna 4i. Each amplifier and receiver circuit 3i may have output terminals 5i for supplying a radar signal 20 to be transmitted via a transmit antenna 2i, for a local oscillator signal 81 to be provided to a local oscillator signal input terminal 336 of a next amplifier and receiver circuit 3i in a chain 30j of amplifier and receiver circuits 3i, an intermediate frequency signal 7i to be provided to a demodulator circuit 80. Terminal 516 may be an input terminal to control a phase shift.

The demodulator circuit 80 may have input terminals for receiving the intermediate frequency signals 7i from the amplifier and receiver circuits 3i. The demodulator circuit 80 may have output terminals 518, 519 for outputting a demodulated baseband radar signal. The output signal may be converted to a digital signal.

The voltage-controlled oscillator circuit 80 may have at least one of an input terminal for setting a local oscillator frequency (switching a frequency band) and an input terminal for a reference clock 358 (which may be for example 50 MHz). The voltage-controlled oscillator circuit 80 may have an input terminal 515 for modulating the local oscillator frequency by voltage or current control. The voltage-controlled oscillator 80 may comprise a divider, and a filter for a divider test output. The demodulator circuit may comprise an adder, a base band circuit and an analog-to-digital converter.

Summarized, a radar beam may be steered on the transmitter side and on the receiver side. A multiple amplifier and receiver circuit chipset may be employed. Each amplifier and receiver circuit may include a single phase shifter. Each amplifier and receiver circuit may operate with an own phase to which both, the amplifier and the receiver of the (considered) amplifier and receiver circuit are synchronized. Hence, a novel antenna arrangement and amplifier and receiver chipset partitioning are provided by the present invention. By this concept, limitations of beam forming systems based on beam forming only on the receiver side may be overcome. Due to reduced losses form the antenna to the chip, a smaller antenna, or lower power consumption may result in a smaller sensor. With the described example configuration up to 16 synthetic channels with beam forming on the transmit side and the receive side is possible. Any of the devices described above may be integrated completely within one integrated circuit. Any of the devices disclosed above may be integrated completely on one die.

In the foregoing specification, the invention has been described with reference to specific examples of embodiments of the invention. It will, however, be evident that various modifications and changes may be made therein without departing from the scope of the invention as set forth in the appended claims.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals.

Although specific conductivity types or polarity of potentials have been described in the examples, it will be appreciated that conductivity types and polarities of potentials may be reversed.

Each signal described herein may be designed as positive or negative logic. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality. For example, the sensing section may be seen as being separate from the sensing arrangement switching device, or they may be components of a common circuitry. An analogous statement holds for the storage section and the storage arrangement switching device. For the transistors, any kind of suitable transistor may be utilized. A transistor e.g. may be a bipolar junction transistor, a field effect transistor, a MOSFET (metal-oxide-semiconductor field-effect transistor), JFET (junction gate field-effect transistor) or any other kind of transistor. For different transistors, different types of transistors may be utilized. For example, the type of transistor used for one of the transistors of the input differential pair may be different from the type of transistor used for the gate transistors.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediate components. Likewise, any two components so associated can also be viewed as being "operably connected," or "operably coupled," to each other to achieve the desired functionality.

Furthermore, those skilled in the art will recognize that boundaries between the above described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. For example, the transistors respectively the latch circuits may be implemented on a common substrate. Alternatively, the examples may be implemented as any number of separate integrated circuits or separate devices interconnected with each other in a suitable manner. For example, each latch circuit may be implemented as individual module, wherein the modules may be interconnected. Also for example, the examples, or portions thereof, may implemented as soft or code representations of physical circuitry or of logical representations convertible into physical circuitry, such as in a hardware description language of any appropriate type.

The semiconductor substrate described herein can be any semiconductor material or combinations of materials, such as gallium arsenide, silicon germanium, silicon-on-insulator (SOI), silicon, monocrystalline silicon, the like, and combinations of the above.

In the foregoing specification, the invention has been described with reference to specific examples of embodiments of the invention. It will, however, be evident that various modifications and changes may be made therein without departing from the scope of the invention as set forth in the appended claims.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A radar circuit (310) comprising a first chain (301) of at least two radar components (39i), wherein each of the radar components (39i) comprises:
- a transmit antenna (2i) for emitting radar waves (20);
- a receive antenna (4i) for receiving radar response waves (320)
- an amplifier and receiver circuit (3i) for amplifying radar signals (20) and for receiving radar response signals (320), the amplifier and receiver circuit (3i) comprising a frequency multiplier (420) and a phase shifter (323) for shifting a phase of the radar signals (20) to be amplified and for synchronously shifting the received radar response signals (320) by shifting a phase of a local oscillator signal (82) provided to the frequency multiplier (420).

2. The radar circuit (310) according to claim 1, wherein the transmit antennas (2i) and receive antennas (4i) of the radar components (39i) are formed by an antenna device (1i) comprising a first chain (301) of at least two antenna components (31i), wherein each of the antenna components (31i) comprises:
- a transmit antenna (2i) having a line of antenna patches (92) for emitting radar waves (22i); and
- a receive antenna (4i) having a line of antenna patches (92) for receiving radar response waves (320); wherein the line of antenna patches (92) of the receive antenna (4i) is aligned with the line of antenna patches (92) of the transmit antenna (2i).

3. The radar circuit (310) according to claim 1 or 2, wherein the amplifier and receiver circuit (3i) of each radar component (39i) is located between the transmit antenna (2i) of the radar component (39i) and the receive antenna (4i) of the radar component (39i).

4. The radar circuit (310) according to one of claims 1 to 3, wherein each of the radar components (39i) comprises only one amplifier and receiver circuit (3i) for generating radar signals (20) and for receiving radar response signals (320).

5. The radar circuit (310) according to one of claims 1 to 4, wherein a local oscillator (80) is located between the first chain (301) of radar components (39i) and a second chain (302) of radar components (31i), wherein the radar components (39i) of the second chain (302) comprise:
- an amplifier and receiver circuit (3i) for amplifying radar signals (20) and for receiving radar response signals (320), the amplifier and receiver circuit (3i) comprising a phase shifter (323) for shifting a phase of the radar signals (20) to be amplified and for synchronously shifting the received radar response signals (320);
- a transmit antenna (2i) for emitting radar waves (20); and
- a receive antenna (4i) for receiving radar response waves (320).

6. The radar circuit (310) according to claim 5, wherein the amplifier and receiver circuits (3i) of the second chain (302) of radar components (3i) comprises a frequency multiplier (420).

7. The radar circuit (310) according to one of claims 1 to 6, wherein the radar circuit (310) further comprises a phase controller (350).

8. The radar circuit (310) according to one of claims 1 to 7, wherein the radar circuit (310) further comprises a local oscillator (80).

9. The radar circuit (310) according to one of claims 1 to 8, wherein the whole radar circuit (310) is integrated on one integrated circuit.

10. The radar circuit (310) according to claim 9, wherein the whole radar circuit (310) is integrated on one die.

## Patentansprüche

1. Ein Radarschaltkreis (310) aufweisend eine erste Kette (301) von zumindest zwei Radarkomponenten (39i), wobei jede der Radarkomponenten (39i) aufweist:
- eine Sendeantenne (2i) zum Emittieren von Radarwellen (20);
- eine Empfangsantenne (4i) zum Empfangen von Radar Antwort Wellen (320)
- einen Verstärker- und Empfängerschaltkreis (3i) zum Verstärken von Radarsignalen (20) und zum Empfangen von Radar Antwort Signalen (320), wobei der Verstärker- und Empfängerschaltkreis (3i) aufweist einen Frequenzvervielfacher (420) und einen Phasenverschieber (323) zum Verschieben einer Phase der zu verstärkenden Radarsignale (20) und zum synchronen Verschieben der empfangenen Radar Antwort Signale (320) mittels Verschiebens einer Phase eines lokalen Oszillatorsignals (82), welches bereitgestellt ist zu dem Frequenzvervielfacher (420).

2. Der Radarschaltkreis (310) gemäß Anspruch 1, wobei die Sendeantennen (2i) und Empfangsantennen (4i) der Radarkomponenten (39i) geformt sind mittels einer Antennenvorrichtung (1i), welche eine erste Kette (301) von zumindest zwei Antennenkomponenten (31i) aufweist, wobei jede der Antennenkomponenten (31i) aufweist:
- eine Sendeantenne (2i), welche eine Linie von Antennenpatches (92) zum Emittieren von Radarwellen (22i) hat; und
- eine Empfangsantenne (4i), welche eine Linie von Antennenpatches (92) hat zum Empfangen von Radar Antwort Wellen (320); wobei die Linie der Antennenpatches (92) der Empfangsantenne (4i) an der Linie der Antennenpatches (92) der Sendeantenne (2i) ausgerichtet ist.

3. Der Radarschaltkreis (310) gemäß Anspruch 1 oder 2, wobei der Verstärker- und Empfängerschaltkreis (3i) jeder Radarkomponente (39i) sich befindet zwischen der Sendeantenne (2i) der Radarkomponente (39i) und der Empfangsantenne (4i) der Radarkomponente (39i).

4. Der Radarschaltkreis (310) gemäß einem der Ansprüche 1 bis 3, wobei jede der Radarkomponenten (39i) nur einen Verstärker- und Empfängerschaltkreis (3i) aufweist zum Generieren von Radarsignalen (20) und zum Empfangen von Radar Antwort Signalen (320).

5. Der Radarschaltkreis (310) gemäß einem der Ansprüche 1 bis 4, wobei ein lokaler Oszillator (80) sich befindet zwischen der ersten Kette (301) von Radarkomponenten (39i) und einer zweiten Kette (302) von Radarkomponenten (31i), wobei die Radarkomponenten (39i) der zweiten Kette aufweisen:
- einen Verstärker- und Empfängerschaltkreis (3i) zum Verstärken von Radarsignalen (20) und zum Empfangen von Radar Antwort Signalen (320), wobei der Verstärker- und Empfängerschaltkreis (3i) aufweist einen Phasenverschieber (323) zum Verschieben einer Phase von den zu verstärkenden Radarsignalen (20) und zum synchronen Verschieben der empfangenen Radar Antwort Signale (320);
- eine Sendeantenne (2i) zum Emittieren von Radarwellen (20); und
- eine Empfangsantenne (4i) zum Empfangen von Radar Antwort Wellen (320).

6. Der Radarschaltkreis (310) gemäß Anspruch 5, wobei der Verstärker- und Empfängerschaltkreis (3i) der zweiten Kette (302) der Radarkomponenten (3i) einen Frequenzvervielfacher aufweist.

7. Der Radarschaltkreis (310) gemäß irgendeinem der Ansprüche 1 bis 6, wobei der Radarkreislauf (310) ferner einen Phasencontroller (350) aufweist.

8. Der Radarschaltkreis (310) gemäß irgendeinem der Ansprüche 1 bis 7, wobei der Radarschaltkreis (310) ferner einen lokalen Oszillator aufweist.

9. Der Radarschaltkreis (310) gemäß irgendeinem der Ansprüche 1 bis 8, wobei der gesamte Radarschaltkreis (310) auf einem einzigen integrierten Schaltkreis integriert ist.

10. Der Radarschaltkreis (310) gemäß Anspruch 9, wobei der gesamte Radarschaltkreis (310) auf einem einzigen Halbleiterplättchen integriert

## Revendications

1. Circuit radar (310) comprenant une première chaîne (301) d'au moins deux composants radar (39i), chacun des composants radar (39i) comprenant :
- une antenne émettrice (2i) destinée à émettre des ondes radar (20) ;
- une antenne réceptrice (4i) destinée à recevoir des ondes de réponse radar (320) ;
- un circuit amplificateur et récepteur (3i) destiné à amplifier des signaux radar (20) et à recevoir des signaux de réponse radar (320), le circuit amplificateur et récepteur (3i) comprenant un multiplicateur de fréquence (420) et un déphaseur (323) destiné à déphaser les signaux radar (20) à amplifier et à décaler de façon synchrone les signaux de réponse radar reçus (320) en déphasant un signal d'oscillateur local (82) délivré au multiplicateur de fréquence (420) .

2. Circuit radar (310) selon la revendication 1, dans lequel les antennes émettrices (2i) et les antennes réceptrices (4i) des composants radar (39i) sont formées par un dispositif d'antenne (1i) comprenant une première chaîne (301) d'au moins deux composants d'antenne (31i), chacun des composants d'antenne (31i) comprenant :
- une antenne émettrice (2i) présentant une ligne de patchs d'antenne (92) destinés à émettre des ondes radar (22i) ; et
- une antenne réceptrice (4i) présentant une ligne de patchs d'antenne (92) destinés à recevoir des ondes de réponse radar (320) ; la ligne de patchs d'antenne (92) de l'antenne réceptrice (4i) étant alignée avec la ligne de patchs d'antenne (92) de l'antenne émettrice (2i).

3. Circuit radar (310) selon la revendication 1 ou 2, dans lequel le circuit amplificateur et récepteur (3i) de chaque composant radar (39i) est situé entre l'antenne émettrice (2i) du composant radar (39i) et l'antenne réceptrice (4i) du composant radar (39i).

4. Circuit radar (310) selon l'une des revendications 1 à 3, dans lequel chacun des composants radar (39i) comprend un seul circuit amplificateur et récepteur (3i) destiné à générer des signaux radar (20) et à recevoir des signaux de réponse radar (320).

5. Circuit radar (310) selon l'une des revendications 1 à 4, dans lequel un oscillateur local (80) est situé entre la première chaîne (301) de composants radar (39i) et une deuxième chaîne (302) de composants radar (31i), les composants radar (39i) de la deuxième chaîne (302) comprenant :
- un circuit amplificateur et récepteur (3i) destiné à amplifier des signaux radar (20) et à recevoir des signaux de réponse radar (320), le circuit amplificateur et récepteur (3i) comprenant un déphaseur (323) destiné à déphaser les signaux radar (20) à amplifier et à décaler de façon synchrone les signaux de réponse radar reçus (320) ;
- une antenne émettrice (2i) destinée à émettre des ondes radar (20) ; et
- une antenne réceptrice (4i) destinée à recevoir des ondes de réponse radar (320).

6. Circuit radar (310) selon la revendication 5, dans lequel les circuits amplificateurs et récepteurs (3i) de la deuxième chaîne (302) de composants radar (3i) comprennent un multiplicateur de fréquence (420).

7. Circuit radar (310) selon l'une des revendications 1 à 6, lequel circuit radar (310) comprend en outre une unité de commande de phase (350).

8. Circuit radar (310) selon l'une des revendications 1 à 7, lequel circuit radar (310) comprend en outre un oscillateur local (80).

9. Circuit radar (310) selon l'une des revendications 1 à 8, lequel circuit radar (310) est intégré dans sa totalité sur un unique circuit intégré.

10. Circuit radar (310) selon la revendication 9, lequel circuit radar (310) est intégré dans sa totalité sur une unique puce.
